# EUROPÄISCHE PATENTSCHRIFT

(11) **EP 1 382 478 B1**
(45) Veröffentlichungstag und Bekanntmachung des Hinweises auf die Patenterteilung: **19.07.2006**
(21) Anmeldenummer: 03009687.9
(22) Anmeldetag: 30.04.2003
(51) Int. Cl.: B60K 37/02

(54) **Anzeigeinstrument mit einem Gehäuse**
Display apparatus with a housing
Appareil indicateur avec un boitier

(30) Priorität: 18.07.2002 DE 10232601
(43) Veröffentlichungstag der Anmeldung: 21.01.2004
(73) Patentinhaber: Dr.Ing. h.c.F. Porsche Aktiengesellschaft, 70435 Stuttgart (DE)
(72) Erfinder: Pandura, Michael, 74189 Weinsberg (DE)

(56) Entgegenhaltungen:
- EP-A- 1 013 496
- DE-A- 19 934 446
- FR-A- 2 796 599

## Beschreibung

Die Erfindung bezieht sich auf ein Anzeigeinstrument mit einem Gehäuse nach dem Oberbegriff des Anspruchs 1.

Aus der DE 199 34 446 A1 ist ein Anzeigeinstrument mit einem Gehäuse bekannt, das einen eine Deckscheibe haltenden Frontrahmen aufweist und in eine Ausnehmung einer Instrumententafel eines Kraftfahrzeugs einsetzbar ist. Damit eine sichere und exakte Anordnung von Deckscheibe und Frontrahmen zueinander sowie der Anzeigeinstrumente in der Instrumententafel erzielt wird, ist zwischen Deckscheibe und Frontrahmen ein elastisches Verbindungselement angeordnet, das mit der Deckscheibe oder dem Frontrahmen einteilig ausgeführt sein kann. Aus der gattungbildenden FR 2796599 A ist ein Kombiinstrument für ein Kraftfahrzeug bekannt, welches ein Verbindungsteil umfasst, an dem ein Zifferblatt und ein Instrumententräger befestigt ist. Das Verbindungsteil ist mit dem Instrumententräger über eine Steckverbindung verbindbar. Diese Steckverbindung umfasst einen Vorsprung am Verbindungsträger, welcher in eine Aufnahme des Instrumententrägers einsteckbar ist. Des weiteren ist aus der EP 1013496 A ein Anzeigeinstrument bekannt, welches eine mit einem Frontrahmen verbundene Deckscheibe aufweist, die mittels eines Steges in ein elastisches Abstandselement einsetzbar ist.

Die Aufgabe der Erfindung besteht darin, ein Anzeigeinstrument mit einem Gehäuse zu schaffen, welches in einfacher Weise mit einer oder mehreren Blenden verbindbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß die in das Gehäuse für die Instrumente einsetzbaren Blenden in eine nutförmige Aufnahme des Gehäuses bzw. eines Vorsatzrahmens eingesteckt werden. Insbesondere ist nach der Erfindung vorgesehen, dass im Vorsatzrahmen zwischen hochstehenden Umrandungen für die Instrumente und vorragenden randseitigen Rahmen oder Rahmenabschnitten nutförmige Aufnahmen gebildet sind, in welche die Instrumentenblenden mit einem weichelastischen Rand gesteckt werden. Hierdurch wird in vorteilhafter Weise erreicht, dass diese Blenden zum Vorsatzrahmen des Gehäuses eine Schwingungsentkopplung sowie ein gewisser Toleranzausgleich geschaffen wird.

Insbesondere besteht der weichelastische Rand aus einer mit der starren Instrumentenblende verbundenen weichelastischen Lippe, die einen freistehenden festen Rand der Instrumentenblende umschließt, wobei diese weichelastische Lippe in einem Zweikomponenten-Spritzgußverfahren mit der starren Instrumentenblende verbindbar ist. Durch die Anformung der weichelastischen Lippe am freien Rand der Instrumentenblende, wird an dieser ein von der starrend Blende wegragender Bereich geschaffen, der in eingesteckter Montagestellung unmittelbar von der Aufnahme in dem Vorsatzrahmen umschlossen ist.

Da die weichelastische Lippe mit einer weichelastischen Leiste zumindest von einer Fläche der Instrumentenblende vorragend ist und desweiteren die weichelastische Lippe zumindest von einer Fläche der Instrumentenblende vorragende weichelastische Nasen aufweist, die auf einer gegenüberstehenden Seite des Randes und der weichelastischen Leiste angeordnet sind, wird eine optimale Klemmverbindung in der nutförmigen Aufnahme des Vorsatzrahmens erzielt. Diese an der Innen- und/oder Außenfläche der Instrumentenblende vorragende Leiste und vorragenden Nasen bewirken in vorteilhafter Weise, daß eine gewisse elastische Abpolsterung der Blende zur Aufnahme erfolgt und hierdurch eine ungünstige Schwingungsbeeinflussung vermieden wird. Außerdem wird durch die weichelastischen abstehenden Nasen eine vereinfachte Montage bzw. Einstecken in die Aufnahme sowie ein Toleranzausgleich erzielt. Ferner wird eine direkte Anlage der starren Blendenflächen an den gegenüberstehenden Flächen der Ausnehmung im Vorsatzrahmen vermieden.

Es ist bei der Ausführung vorgesehen, daß die Nasen von einer Außenfläche der Instrumentenblende vorragend sind und an einer Innenfläche die weichelastische Leiste angeordnet wird. Desweiteren ist vorgesehen, daß der weichelastische Rand in der nutförmigen Aufnahme eingeklemmt derart gehalten wird, daß die starre Instrumentenblende beabstandet zu den Wandungsflächen der Aufnahme zu liegen kommt.

Die umlaufende weichelastische Leiste an der Innenfläche der Blende bewirkt im sichtbaren Bereich auf die Instrumente einen durchgehenden Abschluß, der mit den Nasen an der Außenfläche der Blende nicht erzielbar ist.

Ein Ausführungsbeispiel der Erfindung ist in den Zeichnungen dargestellt und wird im folgenden näher beschrieben.

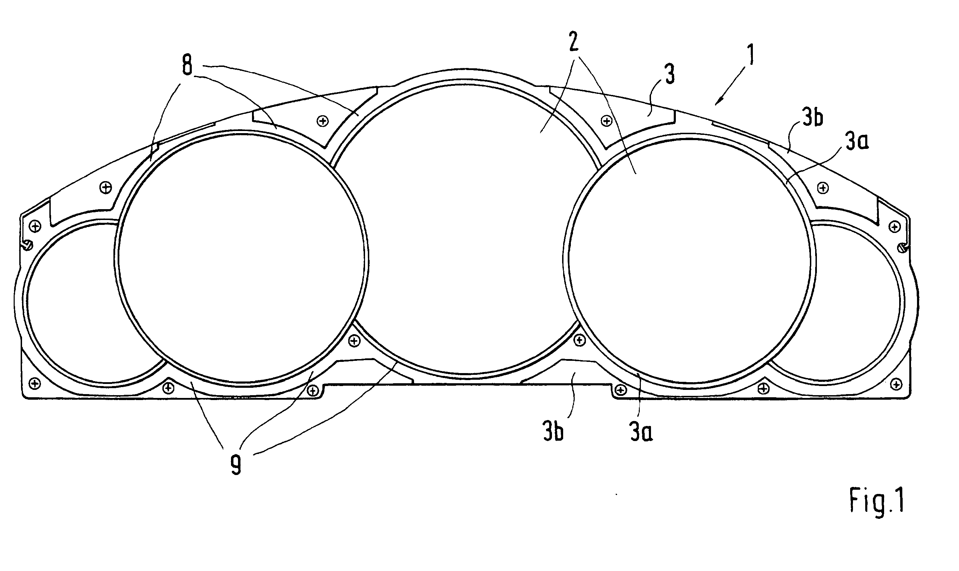

Es zeigen
- Fig. 1: eine Vorderansicht auf die in einem Gehäuse eingesetzten Anzeigeinstrumente mit einem Vorsatzrahmen und einer nutförmigen Aufnahme für die Instrumentenblenden,

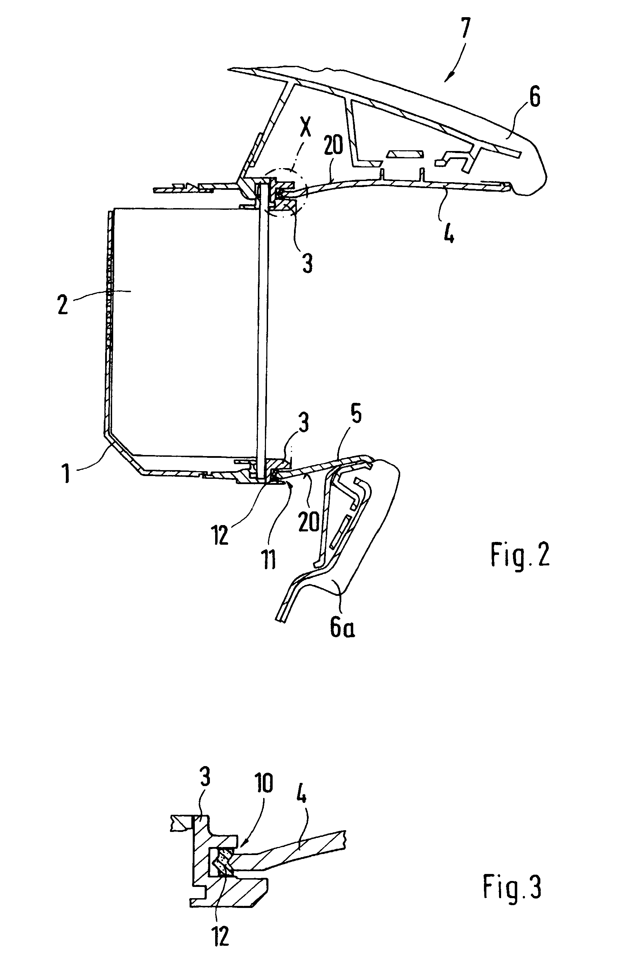

- Fig. 2: einen Schnitt durch das Anzeigeinstrument mit eingesetzten oberen und unteren Blenden,
- Fig. 3: eine vergrößerte Darstellung gem. Einzelheit X in Fig. 2 und

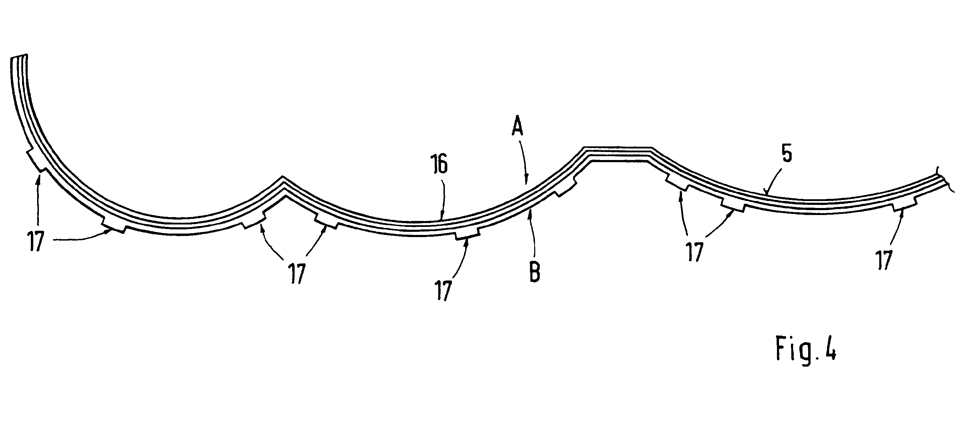

- Fig. 4: eine schaubildliche Ansicht auf eine Blende mit weichelastischer Lippe.

In einem Gehäuse 1 sind mehrere Anzeigeinstrumente 2 angeordnet, die vorderseitig von einem Abdeckrahmen 3 umgeben sind. Mit diesem ist eine obere Instrumentenblende 4 und eine weitere untere Instrumentenblende 5 verbunden. Die Instrumentenblenden 4 und 5 sind über Verkleidungen 6, 6a in das Armaturenbrett 7 des Fahrzeugs integriert.

Der Vorsatzrahmen 3 umfaßt zur Verbindung mit den Blenden 4 und 5, die Instrumente 2 teilweise umgebende nutförmige Aufnahmen 8, 9 zwischen hochstehenden Umrandungen 3a und zwischen randseitigen Rahmen bzw. Rahmenabschnitten 3b. In diese Aufnahmen 8, 9 wird der aus einer weichelastischen Lippe 12 bestehende freiliegende Rand 10, 11 der Blende 4,5 so eingesteckt, daß diese eine Abschirmung für die Instrumente 2 bilden.

Die weichelastische Lippe 12 am Rand 10, 11 ist mit der starren Blende 4,5 einteilig ausgeführt. Insbesondere wird die weichelastische Lippe 12 in einem Zweikomponenten-Spritzverfahren mit der starren Instrumentenblende 4,5 verbunden.

Die weichelastische Lippe 12 ist in der Weise ausgebildet, daß an einer Seite A der Blende 4, 5 sich eine weichelastische Leiste 16 ausbildet und sich desweiteren an einer gegenüberliegenden Seite B der Blende 4, 5 weichelastische Nasen 17 ausbilden.

Insbesondere sind die weichelastischen Nasen 17 von der Außenfläche B der Blenden 4, 5 wegragend, wobei die weichelastische Leiste 16 von der Innenfläche A sich wegerstreckt.

Die Blenden 4, 5 werden mit ihren freistehenden weichelastischen Rändern 10, 11, die aus sogenannten weichelastischen Lippen 12 bestehen, mit einer vorragenden Leiste 16 und vorragenden Nasen 17 in die nutförmigen Aufnahmen 8, 9 hineingedrückt und werden in dieser klemmend gehalten. Die vorragende Leiste 16 sowie die vorragenden Nasen 17 sind weichelastisch ausgeführt und legen sich an die Wandungen der Aufnahmen 8, 9 elastisch an. Eine weitere Festlegung der Blenden 4, 5 erfolgt über Befestigungsschrauben am Armaturenbrett 6, was nicht näher dargestellt ist.

## Patentansprüche

1. Anzeigeinstrument mit einem Gehäuse, das einen Vorsatzrahmen (3) aufweist, welcher mit wenigstens einer Instrumentenblende (4, 5) über ein Klemmelement verbunden ist, wobei im Vorsatzrahmen (3) zwischen hochstehenden Umrandungen (3a) für die einzelnen Instrumente (2) und korrespondierenden vorragenden randseitigen Rahmen oder Rahmenabschnitten (3b) nutförmige Aufnahmen (8 und 9) gebildet sind **dadurch gekennzeichnet, dass** die Instrumentenblende (4, 5) in die nutförmige Aufnahmen mit einem weichelastischen Rand (10, 11) eingesteckt ist, der aus einer mit der starren Instrumentenblende (4, 5) verbundenen weichelastischen Lippe (12) besteht, die einen freistehenden Rand der Instrumentenblende (4, 5) umschließt und die weichelastische Lippe (12) Nasen (17) aufweist, die von der Lippe (12) zur Außenfläche (B) der Instrumentenblende (4, 5) vorragend sind und von der Lippe (12) zur Innenfläche (A) der Instrumentenblende (4, 5) eine weichelastische Leiste (16) vorragend ausgebildet ist.

2. Anzeigeinstrument nach Anspruch 1, **dadurch gekennzeichnet, dass** die weichelastische Lippe (12) in einem Zweikomponenten-Spritzgussverfahren mit der starren Instrumentenblende (4, 5) verbunden ist.

3. Anzeigeinstrument nach den Ansprüchen 1 oder 2, **dadurch gekennzeichnet, dass** die weichelastische Lippe (12) mit einer weichelastischen Leiste von der Außenfläche (B) der Instrumentenblende (4, 5) vorragend ist.

4. Anzeigeinstrument nach den Ansprüchen 1, 2 oder 3, **dadurch gekennzeichnet, dass** die weichelastische Lippe (12) zumindest von einer Fläche (A) oder (B) der Instrumentenblende (4, 5) vorragende weichelastische Nasen (17) aufweist, die auf einer gegenüberstehenden Seite zum Rand (10, 11) mit der weichelastischen Leiste (16) angeordnet sind.

5. Anzeigeinstrument nach einem oder mehreren der vorhergehenden Ansprüche, **dadurch gekennzeichnet, dass** der weichelastische Rand (10, 11) in der nutförmigen Aufnahme (8, 9) eingeklemmt derart gehalten ist, dass die starre Instrumentenblende (4, 5) beabstandet zu der Wandung der Aufnahmen (8, 9) zu liegen kommt.

## Claims

1. An indicating instrument with a housing which has an auxiliary frame (3) connected to at least one instrument surround (4, 5) by a clamping member, wherein groove-type recesses (8 and 9) are formed in the auxiliary frame (3) between upright edges (3a) for the individual instruments (2) and corresponding projecting edge frames or frame portions (3b), **characterised in that** the instrument surround (4, 5) is inserted into the groove-type recesses by means of a soft elastic edge (10, 11) comprising a soft elastic lip (12) which is connected to the rigid instrument surround (4, 5) and which surrounds a free edge of the instrument surround (4, 5), and the soft elastic lip (12) has lugs (17) which project from the lip (12) towards the outer surface (B) of the instrument surround (4, 5), and a soft elastic strip (16) projects from the lip (12) towards the inner surface (A) of the instrument surround (4, 5).

2. An indicating instrument according to claim 1, **characterised in that** the soft elastic lip (12) is connected to the rigid instrument surround (4, 5) in a two-component injection-moulding process.

3. An indicating instrument according to claim 1 or claim 2, **characterised in that** the soft elastic lip (12) has a soft elastic strip projecting from the outer surface (B) of the instrument surround (4, 5).

4. An indicating instrument according to claim 1, 2 or 3, **characterised in that** the soft elastic lip (12) has soft elastic lugs (17) which project at least from a surface (A) or (B) of the instrument surround (4, 5) and which are arranged on an opposite side to the edge (10, 11) with the soft elastic strip (16).

5. An indicating instrument according to one or more of the preceding claims, **characterised in that** the soft elastic edge (10, 11) is held clamped in the groove-type recess (8, 9) in such a way that the rigid instrument surround (4, 5) comes to lie with spacing from the wall of the recesses (8, 9).

## Revendications

1. Indicateur doté d'un boîtier, qui comprend un cadre adaptable (3), lequel est relié à au moins un écran d'indicateur (4, 5) par un élément de serrage, des réceptions annulaires (8, 9) étant formées dans le cadre adaptable (3) entre des bordures surélevées (3a) pour les indicateurs individuels (2) et des cadres ou sections de cadre côté bord en saillie correspondant(e)s (3b), **caractérisé en ce que** l'écran d'indicateur (4, 5) est encastré dans les réceptions annulaires avec un bord élastique souple (10, 11), qui est constitué d'une lèvre élastique souple (12) reliée à l'écran d'indicateur rigide (4, 5), laquelle lèvre entoure un bord dégagé de l'écran d'indicateur (4, 5) et la lèvre élastique souple (12) comprend des taquets (17), qui dépassent de la lèvre (12) en direction de la surface extérieure (B) de l'écran d'indicateur (4, 5) et une baguette élastique souple (16) est conçue en dépassant de la lèvre (12) en direction de la surface intérieure (A) de l'écran d'indicateur (4, 5).

2. Indicateur selon la revendication 1, **caractérisé en ce que** la lèvre élastique souple (12) est reliée au cours d'un processus d'injection à deux composants à l'écran d'indicateur rigide (4, 5).

3. Indicateur selon l'une quelconque des revendications 1 ou 2, **caractérisé en ce que** la lèvre élastique souple (12) dépasse avec une baguette élastique souple de la surface extérieure (B) de l'écran d'indicateur (4, 5).

4. Indicateur selon l'une quelconque des revendications 1, 2 ou 3, **caractérisé en ce que** la lèvre élastique souple (12) comprend des taquets élastiques souples (17) dépassant au moins d'une surface (A) ou (B) de l'écran d'indicateur (4, 5), lesquels taquets sont disposés sur une face opposée par rapport au bord (10, 11) avec la baguette élastique souple (16).

5. Indicateur selon l'une quelconque des revendications précédentes, **caractérisé en ce que** le bord élastique souple (10, 11) est maintenu serré dans la réception annulaire (8, 9), de telle sorte que l'écran d'indicateur rigide (4, 5) vient se situer à distance de la paroi des réceptions (8, 9).
